(19) Europäisches Patentamt
European Patent Office
Office européen des brevets

(11) **EP 4 730 552 A1**

(12) **EUROPEAN PATENT APPLICATION**
published in accordance with Art. 153(4) EPC

(43) Date of publication:
**22.04.2026 Bulletin 2026/17**

(21) Application number: **24842207.3**

(22) Date of filing: **04.07.2024**

(51) International Patent Classification (IPC):
**H01Q 1/00** (2006.01)

(52) Cooperative Patent Classification (CPC):
**H01Q 1/00; H01Q 1/12; H01Q 1/24; H01Q 1/50;
H01Q 3/06; H01Q 21/00**

(86) International application number:
**PCT/CN2024/103703**

(87) International publication number:
**WO 2025/016212 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.07.2023 CN 202310891435**

(71) Applicant: **Huawei Technologies Co., Ltd.
Shenzhen, Guangdong 518129 (CN)**

(72) Inventors:
• **GONG, Zhengwei**
 **Shenzhen, Guangdong 518129 (CN)**
• **ZHU, Xiaolong**
 **Shenzhen, Guangdong 518129 (CN)**
• **ZHANG, Qingchuan**
 **Shenzhen, Guangdong 518129 (CN)**
• **ZHOU, Jiachong**
 **Shenzhen, Guangdong 518129 (CN)**

(74) Representative: **Gill Jennings & Every LLP
The Broadgate Tower
20 Primrose Street
London EC2A 2ES (GB)**

(54) **ANTENNA, ANTENNA FEEDER SYSTEM AND BASE STATION**

(57)    This application relates to the field of communication technologies, and provides an antenna, an antenna feeder system, and a base station, to provide an antenna that can balance a beamforming capability and safety. The antenna includes a first antenna array and a second antenna array. The first antenna array and the second antenna array can rotate relative to each other. Therefore, the antenna provided in this application can balance the beamforming capability and safety in different wind force conditions by reducing an antenna surface area of the antenna.

FIG. 7

EP 4 730 552 A1

## Description

This application claims priority to Chinese Patent Application No. 202310891435.9, filed with the China National Intellectual Property Administration on July 19, 2023 and entitled "ANTENNA, ANTENNA FEEDER SYSTEM, AND BASE STATION", which is incorporated herein by reference in its entirety.

## TECHNICAL FIELD

This application relates to the field of communication technologies, and in particular, to an antenna, an antenna feeder system, and a base station.

## BACKGROUND

In recent years, in a wireless communication system, a multi-antenna technology is a main means of improving a communication capability. However, with rapid growth of communication requirements, a quantity of elements of a multi-antenna system is increasingly large, and consequently a size of an antenna surface is also increased. The size of the antenna surface affects a wind load of the antenna in extreme weather. Generally, a greater wind load indicates greater pressure on the antenna surface and a corresponding device on which the antenna surface is mounted. Therefore, to maintain a "safe wind load", the size of the antenna surface is limited.

In view of this, a requirement of matching the size of the antenna surface with a gradually improved beamforming capability conflicts with a requirement of matching the size of the antenna surface with a "safe wind load". As a result, current requirements on the antenna cannot be met.

## SUMMARY

Embodiments of this application provide an antenna, an antenna feeder system, and a base station, to provide an antenna that can balance a beamforming capability and a wind load.

To achieve the foregoing objective, this application uses the following technical solutions.

According to a first aspect of embodiments of this application, an antenna is provided. The antenna includes a first antenna array and a second antenna array, and extremely narrow beamforming of the antenna is a corresponding beamforming width when the antenna has a maximum antenna surface area. The maximum antenna surface area of the antenna is a sum of an area of the first antenna array and an area of the second antenna array. The first antenna array and the second antenna array can rotate relative to each other. An included angle between the first antenna array and the second antenna array can be changed by rotating at least one of the first antenna array and the second antenna array.

The antenna provided in embodiments of this application includes the first antenna array and the second antenna array. The first antenna array and the second antenna array can rotate relative to each other. When a plane on which the first antenna array is located and a plane on which the second antenna array is located form an included angle that is not equal to 180°, the plane on which the first antenna array is located serves as a reference plane, and an antenna surface area of the second antenna array is a projection of the second antenna array on the reference plane. In this case, the antenna surface area of the second antenna array is less than the area of the second antenna array. Therefore, in comparison with a case in which the first antenna array and the second antenna array are located on a same plane (where the included angle is 180°), when the first antenna array and the second antenna array rotate to be located on different planes (where the included angle is not equal to 180°), an antenna surface area of the antenna is reduced. In this case, a beamforming capability of the antenna is reduced, to be specific, a beam is gradually widened, but a wind load is reduced. Therefore, rotation of the first antenna array and the second antenna array affects the beamforming capability and a wind load indicator of the antenna. In view of this, the antenna provided in embodiments of this application may adaptively adjust the included angle between the first antenna array and the second antenna array based on a beamforming requirement and a wind load indicator requirement. The antenna surface area of the antenna can be reduced without affecting the beamforming capability of the antenna, to ensure that the antenna meets the wind load indicator.

In a possible implementation, the first antenna array and the second antenna array can rotate relative to each other based on a first parameter. The first antenna array and the second antenna array to rotate relative to each other based on the first parameter, so that the first antenna array and the second antenna array can rotate relative to each other more intelligently and accurately. In this way, performance of a communication system of the antenna and wind load safety of the antenna are better balanced in different wind force scenarios.

In a possible implementation, the first parameter includes a wind force parameter. The wind force parameter includes at least one of wind speed, wind direction, wind force, wind pressure, and wind load. The first antenna array and the second antenna array rotate based on the wind force parameter, to ensure safety of the antenna.

In a possible implementation, the first parameter includes a service parameter. The service parameter includes at least one of service amount and service distribution azimuth. The first antenna array and the second antenna array rotate based on the service parameter, to ensure a communication effect of the antenna.

In a possible implementation, the first parameter includes a rotation parameter. The rotation parameter is generated based on the wind force parameter and/or the service parameter. The wind force parameter includes at least one of wind speed, wind direction, wind force, wind pressure, and wind load, and the service parameter includes at least one of service amount and service distribution azimuth. The antenna receives only the rotation parameter, and adjusts the included angle between the first antenna array and the second antenna array based on the rotation parameter, without processing the service parameter and the wind force parameter. This can simplify a structure of the antenna.

In a possible implementation, the wind force parameter is from a wind force parameter measurement apparatus or a distributed unit corresponding to the antenna. Regardless of whether the wind force parameter is from the distributed unit or the wind force parameter measurement apparatus, implementation is easy.

In a possible implementation, the service parameter is from the distributed unit corresponding to the antenna. As a general control system of a base station, the distributed unit provides the service parameter. This is easy to implement.

In a possible implementation, the rotation parameter is from the distributed unit corresponding to the antenna. As the general control system of the base station, the distributed unit provides the rotation parameter. This is easy to implement.

In a possible implementation, at a same moment, the first antenna array and the second antenna array rotate based on the first parameter. In different application scenarios, main concerns are different. The wind force parameter, the service parameter, or the rotation parameter may be selected based on an application scenario, and an application scope is wide.

In a possible implementation, the antenna further includes a connecting member. The first antenna array and the second antenna array are connected via the connecting member, and the connecting member is configured to drive the first antenna array and the second antenna array to rotate relative to each other. The connecting member serves as a rotating piece, and the first antenna array and the second antenna array serve as stationary pieces. The connecting member drives the first antenna array and the second antenna array to rotate relative to each other. A structure of the connecting member is simple and easy to implement, and stability of the antenna is high.

In a possible implementation, the connecting member includes a first connecting piece and a second connecting piece. The first connecting piece is connected to the first antenna array, and the second connecting piece is connected to the second antenna array. The connecting member includes a plurality of connecting pieces that are connected, and the plurality of connecting pieces can rotate independently. This helps implement independent rotation of the first antenna array and the second antenna array.

In a possible implementation, one end of the connecting member is connected to the first antenna array, and another end of the connecting member is connected to the second antenna array. The connecting member has a simple structure and high stability.

In a possible implementation, the antenna further includes a third antenna array. The third antenna array is disposed on a side that is of the first antenna array and that is away from the second antenna array, and the third antenna array and the first antenna array can rotate relative to each other. In this application, a plurality of antenna arrays may be disposed for the antenna based on application scenarios, to reconstruct the antenna surface area of the antenna.

In a possible implementation, the third antenna array can rotate relative to the first antenna array. In this way, the first antenna array is a stationary radiation surface, and the second antenna array and the third antenna array are adjustable radiation surfaces, to ensure basic performance of the antenna.

In a possible implementation, the antenna further includes a fourth antenna array. A plane on which the fourth antenna array is located intersects the plane on which the second antenna array is located, and the fourth antenna array and the first antenna array can rotate relative to each other. In this application, a plurality of antenna arrays may be disposed for the antenna based on application scenarios, to reconstruct the antenna surface area of the antenna. The plurality of antenna arrays may be located on a plurality of sides of the first antenna array.

In a possible implementation, both the first antenna array and the second antenna array can rotate. In this way, flexibility of the antenna is high, and an adjustment range of the included angle between the first antenna array and the second antenna array is wide.

In a possible implementation, the first antenna array and the second antenna array can rotate to be on a same plane. In this way, a plurality of first elements in the first antenna array and a plurality of second elements in the second antenna array can form a large array with consistent arrangement characteristics, so that the antenna is equivalent to a large antenna whose communication system has good performance.

In a possible implementation, a width of a beam generated when the first antenna array and the second antenna array are located on a same plane is narrower than a width of a beam generated when the plane on which the first antenna array is located intersects the plane on which the second antenna array is located. A narrower beam indicates a larger signal gain, higher energy, and better radiation effect. Therefore, when the first antenna array and the second antenna array are located on a same plane (when the antenna surface area is the largest), that is, in most usage scenarios, radiation is performed with a maximum gain, so that performance of the communication system of the antenna can be optimal.

In a possible implementation, the second antenna array can skip radiating a signal. In this way, extremely narrow beamforming of the antenna is adjustable.

According to a second aspect of embodiments of this application, an antenna feeder system is provided, including a cable and an antenna. The cable is connected to the antenna, and the antenna includes the antenna according to any one of the first aspect.

According to a third aspect of embodiments of this application, a base station is provided, including a distributed unit and the antenna feeder system according to the second aspect. The distributed unit is connected to the antenna feeder system. Alternatively, the base station includes a distributed unit and the antenna according to any one of the first aspect. The distributed unit is connected to the antenna.

In a possible implementation, the distributed unit is configured to provide a service parameter for the antenna. This manner is easy to implement.

In a possible implementation, the distributed unit is further configured to provide a wind force parameter for the antenna. This manner is easy to implement.

In a possible implementation, the distributed unit is further configured to generate the wind force parameter based on meteorological information. In this way, the base station does not need to have a wind force parameter measurement apparatus, and a structure of the base station is simple.

In a possible implementation, the distributed unit is further configured to provide a rotation parameter for the antenna. This manner is easy to implement.

In a possible implementation, the base station further includes a wind force parameter measurement apparatus. An environment in which the wind force parameter measurement apparatus provided by the base station is located is highly similar to an environment in which the antenna is located. Therefore, the wind force parameter is obtained by using the wind force parameter measurement apparatus provided by the base station, and the wind force parameter is more accurate.

In a possible implementation, when the base station obtains both the service parameter and the wind force parameter at a same moment, the distributed unit is configured to choose the wind force parameter as a first parameter based on which a first antenna array and a second antenna array in the antenna rotate. The wind force parameter affects a safe life, and the service parameter affects a communication effect. In this case, rotating based on the wind force parameter can preferentially ensure safety of the antenna.

In a possible implementation, when the base station obtains both the service parameter and the wind force parameter at a same moment, the distributed unit is configured to generate, based on the wind force parameter, the rotation parameter based on which the first antenna array and the second antenna array in the antenna rotate. The wind force parameter affects the safe life, and the service parameter affects the communication effect. In this case, rotating based on the wind force parameter can preferentially ensure the safety of the antenna.

**BRIEF DESCRIPTION OF DRAWINGS**

FIG. 1 is a diagram of an architecture of a base station according to an embodiment of this application;
FIG. 2A is a diagram of an architecture of another base station according to an embodiment of this application;
FIG. 2B is a diagram of an architecture of still another base station according to an embodiment of this application;
FIG. 3 is a diagram of a structure of an antenna according to an embodiment of this application;
FIG. 4 is a diagram of a structure of another antenna according to an embodiment of this application;
FIG. 5 is a diagram of a structure of still another antenna according to an embodiment of this application;
FIG. 6 is a diagram of a structure of a wind force parameter measurement apparatus according to an embodiment of this application;
FIG. 7 is a diagram of a structure of yet another antenna according to an embodiment of this application;
FIG. 8 is a diagram of a beam width according to an embodiment of this application;
FIG. 9 is a diagram of another beam width according to an embodiment of this application;
FIG. 10 is a diagram of still another beam width according to an embodiment of this application;
FIG. 11 is a diagram of a structure of still yet another antenna according to an embodiment of this application; and
FIG. 12 is a diagram of a structure of a further antenna according to an embodiment of this application.

Reference numerals:

10: antenna; 11: antenna array; 111: element; 12: reflective surface;
20: antenna; 21: first antenna array; 211: first element; 22: second antenna array; 221: second element; 23: connecting member; 24: third antenna array; 241: third element; 25: fourth antenna array; 251: fourth element; and
100: base station.

**DESCRIPTION OF EMBODIMENTS**

The following describes the technical solutions in embodiments of this application with reference to the accompanying drawings in embodiments of this application. It is clear that the described embodiments are merely some rather than all of embodiments of this application.

The terms such as "second" and "first" below are merely used for ease of description, and shall not be understood as an indication or implication of relative importance or implicit indication of a quantity of indicated technical features. Therefore, a feature limited by "second", "first", or the like may explicitly or implicitly include one or more features. In the descriptions of this application, unless otherwise specified, "a plurality of" means two or more.

In addition, in embodiments of this application, orientation terms such as "upper", "lower", "left", and "right" may include but are not limited to definitions based on illustrated orientations in which components in the accompanying drawings are placed. It should be understood that, these directional terms may be relative concepts, are used for description and clarification of relative positions, and may vary accordingly depending on a change in the orientations in which the components in the accompanying drawings are placed in the accompanying drawings.

In embodiments of this application, unless otherwise clearly specified and limited, the term "connection" should be understood in a broad sense. For example, the "connection" may be a fixed connection, a detachable connection, or an integrated connection, or may be a direct connection or an indirect connection through an intermediate medium. In addition, the term "coupling" may be a direct electrical connection, or may be an indirect electrical connection through an intermediate medium. The term "contact" may be direct contact, or may be indirect contact through an intermediate medium.

In embodiments of this application, "and/or" describes an association relationship between associated objects and may indicate that three relationships exist. For example, A and/or B may indicate the following cases: Only A exists, both A and B exist, and only B exists, where A and B may be singular or plural. The character "/" generally indicates an "or" relationship between the associated objects.

Embodiments of this application provide a radio access network (radio access network, RAN). Further, an antenna applicable to a radio access network device is provided, to improve a beamforming capability of the radio access network. In addition, safety requirements of the radio access network in different weather conditions can be further met.

The RAN may be a cellular system related to the 3rd generation partnership project (3rd generation partnership project, 3GPP), for example, a 4th generation (fourth generation, 4G) mobile communication system, a 5th generation (fifth generation, 5G) mobile communication system, or a future-oriented evolved system (for example, a 6th generation (sixth generation, 6G) mobile communication system). The RAN may alternatively be an open radio access network (open RAN, O-RAN, or ORAN) or a cloud radio access network (cloud radio access network, CRAN). The RAN may alternatively be a communication system that integrates the foregoing two or more systems. The RAN may also be referred to as an access network device, a RAN entity, an access node, or the like.

In a possible scenario, the access network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The access network device may be a macro base station, a micro base station, an indoor base station, a relay node, a donor node, or a radio controller in a CRAN scenario. Optionally, the access network device may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of access network devices collaborate to assist a terminal in implementing radio access, and different access network devices respectively implement some functions of a base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). The following uses the base station as an example for description.

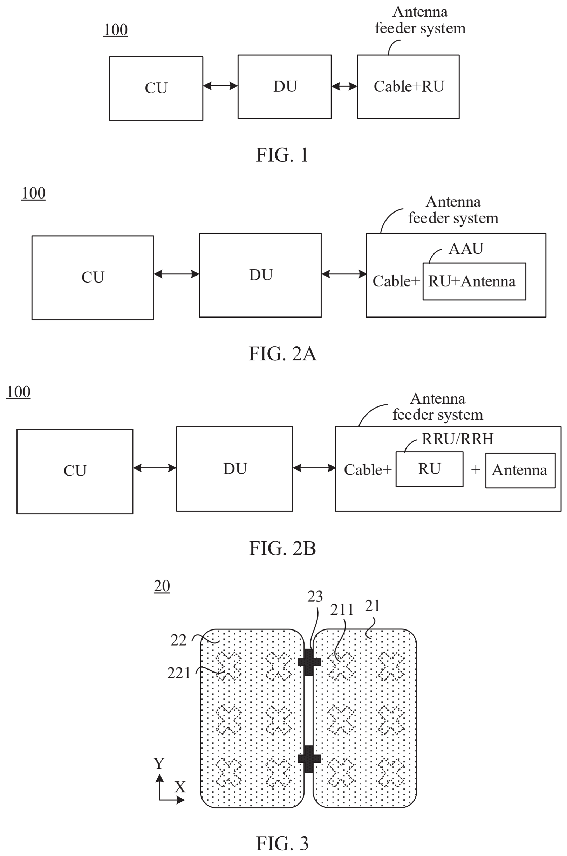

FIG. 1, FIG. 2A, and FIG. 2B each are a diagram of an architecture of a base station according to an embodiment of this application.

As shown in FIG. 1, a base station 100 provided in an embodiment of this application includes a CU, a DU, and an antenna feeder system.

The DU is mainly configured to process a radio link control (Radio Link Control, RLC) protocol, a medium access control (Medium Access Control, MAC) protocol, and some functions of a port physical layer (Port Physical Layer, PHY). The DU is connected to the CU, an operation of the DU is controlled by the CU, and the CU may perform centralized management on a plurality of DUs through a midhaul interface.

The CU is a central unit responsible for processing upper-layer protocols, for example, radio resource control (Radio Resource Control, RRC) or a packet data convergence protocol (Packet Data Convergence Protocol, PDCP).

The antenna feeder system is connected to the DU. The antenna feeder system is mainly configured to: perform transmission and radiation of a radio frequency signal from a transmitter module, to establish a downlink from a base station to a terminal device; and perform receiving and transmission of an uplink signal from the terminal device, to establish an uplink from the terminal device to the base station.

In a possible implementation, as shown in FIG. 1, the antenna feeder system includes a cable and an RU, and the DU is connected to the RU through the cable. The RU is a component responsible for processing at an underlying physical layer, including analog components of a radio transmitter and a radio receiver.

In a possible implementation, as shown in FIG. 2A, the RU may be located in an active antenna unit (Active Antenna Unit, AAU), the RU and an antenna may be integrated into the AAU, and the RU and the antenna are connected through a feeder.

In another possible implementation, as shown in FIG. 2B, the RU may be located in an RRU or an RRH. In this case, the antenna feeder system further includes an antenna externally connected to the RU, and the RU is connected to the antenna through a feeder.

The antenna is a device that receives and radiates a radio signal and that is in the base station 100. The antenna converts a received radio signal into an electrical signal, and transmits the electrical signal to the interior of the base station. In addition, the antenna is also responsible for converting a radio frequency signal of the base station into a radio signal, to radiate the signal to the terminal device.

The antenna further plays an important role in beamforming of a radio signal and increasing a signal coverage area. A beamforming capability of the antenna is related to a size of an antenna surface. Therefore, an antenna with a strong beamforming capability definitely has a large size of an antenna surface.

However, the antenna is usually disposed at an outdoor high-altitude location. As a result, wind force directly affects safety of the antenna. A smaller wind load of the antenna indicates higher safety of the antenna. The following illustrates a relationship between the size of the antenna surface and the wind load.

Generally, the wind load (wind load) WL is proportional to a square of a wind speed $v$, an antenna surface area $A$, and a wind load coefficient $f_w$.

$$WL = f_w \cdot v^2 \cdot A$$

It is clear that the wind load WL is proportional to the antenna surface area A. Generally, a greater wind load WL indicates greater pressure on the antenna. Therefore, to improve safety of the base station in strong wind weather, an area of the antenna is definitely limited.

In this case, an extremely narrow beamforming capability of the antenna is also limited.

FIG. 3 to FIG. 5 each are a diagram of a structure of an antenna according to an embodiment of this application.

As shown in FIG. 3, an antenna 20 includes a first antenna array 21 and a second antenna array 22. The first antenna array 21 includes one or a plurality of first elements 211. The plurality of first elements 211 are arranged, for example, at equal row spacings and equal column spacings. The second antenna array 22 includes one or a plurality of second elements 221. The plurality of second elements 221 are arranged, for example, at equal row spacings and equal column spacings.

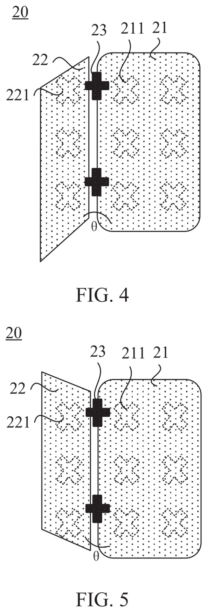

As shown in FIG. 3, a quantity of first elements 211 included in the first antenna array 21 and a quantity of second elements 221 included in the second antenna array 22 may be the same. As shown in FIG. 4, the quantity of first elements 211 included in the first antenna array 21 and the quantity of second elements 221 included in the second antenna array 22 may alternatively be different.

In a possible implementation, an arrangement characteristic of the plurality of first elements 211 and an arrangement characteristic of the plurality of second elements 221 are the same.

For example, the first antenna array 21 and the second antenna array 22 are disposed side by side in a first direction X. The first direction X is a row direction. A second direction Y is a column direction. A column spacing between adjacent first elements 211 in the first direction X is equal to a column spacing between adjacent second elements 221 in the first direction X. A row spacing between adjacent first elements 211 in the second direction Y is equal to a row spacing between adjacent second elements 221 in the second direction Y.

In a possible implementation, a quantity of rows of the first elements 211 in the first antenna array 21 and a quantity of rows of the second elements 221 in the second antenna array 22 are the same.

For example, the first antenna array 21 and the second antenna array 22 have a same size in the second direction Y.

In a possible implementation, a quantity of columns of the first elements 211 in the first antenna array 21 is greater than or equal to a quantity of columns of the second elements 221 in the second antenna array 22.

This arrangement manner of the first antenna array 21 and the second antenna array 22 facilitates signal transmission between a feeder and the antenna 20.

In a possible implementation, the first antenna array 21 is configured to be coupled to the feeder, and a connection is established between the second antenna array 22 and the feeder through the first antenna array 21.

In other words, in the antenna 20, only the first antenna array 21 is directly connected to the feeder, and the second antenna array 22 is not directly connected to the feeder. It is clear that, when the first antenna array 21 and the second antenna array 22 are disposed side by side in the row direction (the first direction X), the first antenna array 21 may be located on the left side of the second antenna array 22 as shown in FIG. 3, or the first antenna array 21 may be located on the right side of the second antenna array 22. Similarly, when the first antenna array 21 and the second antenna array 22 are disposed side by side in the column direction (the second direction Y), the first antenna array 21 may be located on the upper side of the second antenna array 22, or the first antenna array 21 may be located on the lower side of the second antenna array 22. This is not limited in this embodiment of this application. A focus is that, in the two antenna arrays included in the antenna 20, only one antenna array is configured to be directly connected to the feeder, but both the first antenna array 21 and the second antenna array 22 perform signal transmission through the feeder.

In this embodiment of this application, the first antenna array 21 serves as a first radiator of the antenna 20, and the second antenna array 22 serves as a second radiator of the antenna 20. A maximum capacity of the antenna 20 depends on a sum of the quantity of first elements 211 and the quantity of second elements 221. A maximum antenna surface area A of the antenna 20 is a sum of an area of the first antenna array 21 and an area of the second antenna array 22. It is clear that, the capacity of the antenna 20 provided in this embodiment of this application is adjustable. At least some of the plurality of first elements 211 may not radiate a signal. When none of the plurality of first elements 211 radiates a signal, the first antenna array 21 does not radiate a signal. At least some of the plurality of second elements 221 may not radiate a signal. When none of the plurality of second elements 221 radiates a signal, the second antenna array 22 does not radiate a signal. The first antenna array 21 and/or the second antenna array 22 may not radiate a signal. Therefore, extremely narrow beamforming of the antenna 20 is adjustable.

In a possible implementation, the first antenna array 21 and the second antenna array 22 can rotate relative to each other.

It is clear that the first antenna array 21 may remain stationary, and the second antenna array 22 can rotate. Alternatively, the second antenna array 22 may remain stationary, and the first antenna array 21 can rotate. Alternatively, both the first antenna array 21 and the second antenna array 22 can rotate. The first antenna array 21 and the second antenna array 22 are flexibly disposed, and may be used in various application scenarios.

It should be understood that the first antenna array 21 and the second antenna array 22 have a capability of rotating relative to each other, but this is not limited to that the first antenna array 21 and the second antenna array 22 need to rotate relative to each other.

For example, when wind force is greater than a specified value, the first antenna array 21 and the second antenna array 22 can rotate relative to each other. When the wind force is less than the specified value, the first antenna array 21 and the second antenna array 22 are stationary relative to each other. It is clear that the specified value is not limited. The specified value may be selected based on factors such as a wind load WL, shapes of the first antenna array 21 and the second antenna array 22, and a connection manner of the first antenna array 21 and the second antenna array 22.

In a possible implementation, as shown in FIG. 3, the first antenna array 21 and the second antenna array 22 can rotate to be on a same plane (where an included angle $\theta$ is equal to 180°).

In this case, the antenna surface area A of the antenna 20 is the sum of the area of the first antenna array 21 and the area of the second antenna array 22.

In this case, for example, a column spacing between a column of first elements 211 adjacent to the second antenna array 22 and a column of second elements 221 adjacent to the column of first elements 211 is equal to a column spacing between two adjacent columns of first elements 211. Alternatively, it is understood as that the plurality of first elements 211 and the plurality of second elements 221 can form a large array with consistent arrangement characteristics.

In another possible implementation, as shown in FIG. 4, the first antenna array 21 and the second antenna array 22 can rotate until the included angle $\theta$ is less than 180°.

In still another possible implementation, as shown in FIG. 5, the first antenna array 21 and the second antenna array 22 can rotate until the included angle $\theta$ is greater than 180°.

In this case, the antenna surface area A of the antenna 20 is a sum of the area of the first antenna array 21 and an area of a projection of the second antenna array 22 on a plane on which the first antenna array 21 is located.

In a possible implementation, a width of a beam generated when the first antenna array 21 and the second antenna array 22 are located on a same plane is narrower than a width of a beam generated when the plane on which the first antenna array 21 is located intersects a plane on which the second antenna array 22 is located ($\theta \neq 180°$).

A narrower beam indicates a larger signal gain, higher energy, and better radiation effect. Therefore, when the first antenna array 21 and the second antenna array 22 are located on a same plane (when the antenna surface area A is the largest), that is, in most usage scenarios, radiation is performed with a maximum gain, so that performance of a communication system of the antenna 20 can be optimal.

The antenna provided in embodiments of this application includes the first antenna array 21 and the second antenna array 22. The first antenna array 21 and the second antenna array 22 can rotate relative to each other. When the plane on which the first antenna array 21 is located and the plane on which the second antenna array 22 is located form an included angle that is not equal to 180°, the plane on which the first antenna array 21 is located serves as a reference plane, and an antenna surface area of the second antenna array 22 is an area of a projection of the second antenna array 22 on the reference plane. In this case, the antenna surface area of the second antenna array 22 is less than the area of the second antenna array 22. Therefore, in comparison with a case in which the first antenna array 21 and the second antenna array 22 are located on a same plane (where the included angle θ=180°), when the first antenna array 21 and the second antenna array 22 rotate to be located on different planes (where the included angle θ≠180°), the antenna surface area of the antenna 20 is reduced. In this case, a beamforming capability of the antenna 20 is reduced, to be specific, a beam is gradually widened, but a wind load is reduced. Therefore, rotation of the first antenna array 21 and the second antenna array 22 affects the beamforming capability and a wind load indicator of the antenna 20. In view of this, the antenna 20 provided in embodiments of this application may adaptively adjust the included angle between the first antenna array 21 and the second antenna array 22 based on a beamforming requirement and a wind load indicator requirement. The antenna surface area of the antenna 20 can be reduced without affecting the beamforming capability of the antenna 20, to ensure that the antenna 20 meets the wind load indicator.

For example, $A_{max} \leq \frac{WL_{max}}{f_w \cdot v_{max}^2}$. The maximum antenna surface area $A_{max}$ is limited by a maximum wind speed $v_{max}$ under a "safe wind load" $WL_{max}$. When the "safe wind load" $WL_{max}$ is determined and the maximum wind speed $v_{max}$ increases, the maximum antenna surface area $A_{max}$ needs to be reduced. It is assumed that during engineering design, when the first antenna array 21 and the second antenna array 22 are located on a same plane, the maximum wind speed $v_{max} \in [40\ 55]m/s$ under the "safe wind load". When a wind scale is level 12, the wind speed ranges from 32.7 to 36.9 m/s. Therefore, when the wind force exceeds level 12, the maximum antenna surface area $A_{max}$ needs to be reduced to ensure the "safe wind load". However, for the antenna 20 provided in embodiments of this application, in such extreme weather, the antenna surface area A of the antenna 20 may be reduced by rotating at least one of the first antenna array 21 and the second antenna array 22. It should be noted that, although the antenna surface area A is reduced when the wind speed v is high, in such extreme weather, communication requirements are also greatly reduced. In this case, a requirement for the beamforming capability of the antenna 20 is also reduced. Therefore, in this case, the antenna surface area A is reduced to ensure safety performance, and a basic operating size and basic performance of the antenna 20 can still be ensured.

For another example, when the antenna 20 needs "wide coverage", at least one of the first antenna array 21 and the second antenna array 22 can rotate, so that the first antenna array 21 and the second antenna array 22 are adjusted to be in an angle with wide coverage. When a coverage area of the antenna 20 needs to be changed, at least one of the first antenna array 21 and the second antenna array 22 may also rotate, and the first antenna array 21 and the second antenna array 22 face an area that needs to be covered.

A manner in which the first antenna array 21 and the second antenna array 22 rotate relative to each other is as follows.

In a possible implementation, the first antenna array 21 is mechanically connected to the second antenna array 22. The wind load and the wind force are a pair of reaction force. When the wind force is greater than a preset value, the wind force naturally drives the first antenna array 21 and the second antenna array 22 to rotate in a downwind direction, to reduce the wind load, until the wind load is less than the wind force, and then the first antenna array 21 and the second antenna array 22 stop rotating.

In another possible implementation, the first antenna array 21 and the second antenna array 22 can rotate relative to each other based on a first parameter.

In other words, rotation of the first antenna array 21 and the second antenna array 22 is no longer directly determined based on the wind force, but is controlled based on the first parameter. The first parameter carries information indicating how the first antenna array 21 and the second antenna array 22 rotate. For example, the first antenna array 21 rotates by a first angle in a first direction based on the first parameter, so that the included angle between the first antenna array 21 and the second antenna array 22 is a first included angle. Alternatively, the second antenna array 22 rotates by a second angle in a second direction based on the first parameter, so that the included angle between the first antenna array 21 and the second antenna array 22 is a second included angle. Alternatively, the first antenna array 21 rotates by a third angle in a third direction based on the first parameter, and the second antenna array 22 rotates by a fourth angle in a fourth direction based on the first parameter, so that the included angle between the first antenna array 21 and the second antenna array 22 is a third included angle.

The first antenna array 21 and the second antenna array 22 rotate relative to each other based on the first parameter, so that the first antenna array 21 and the second antenna array 22 can rotate relative to each other more intelligently and accurately. In this way, the performance of the communication system of the antenna 20 and wind load safety of the antenna 20 are better balanced in different wind force scenarios.

In a possible implementation, the first parameter includes a wind force parameter.

For example, the wind force parameter includes at least one of wind speed, wind direction, wind force, wind pressure, and wind load. The wind speed refers to an air flow speed, the wind direction refers to a direction in which wind blows, the wind force refers to force exerted by the wind on an object, the wind pressure refers to pressure exerted by the wind on a surface of the object, and the wind load refers to impact of the wind on a structure of the object.

In this case, rotation angles of the first antenna array 21 and the second antenna array 22 are adjusted based on the wind force parameter, to adjust the included angle (or a geometric structure) between the first antenna array 21 and the second antenna array 22. In this way, the wind load safety of the antenna 20 and the performance of the communication system of the antenna 20 are balanced in different wind force scenarios.

For example, for different wind force parameters, the first antenna array 21 and the second antenna array 22 correspond to different included angles, so that the antenna 20 corresponds to different wind loads. For example, for a first wind force parameter, the first included angle is formed between the first antenna array 21 and the second antenna array 22. For a second wind force parameter, the second included angle is formed between the first antenna array 21 and the second antenna array 22. The first wind force parameter and the second wind force parameter are different, and the first included angle and the second included angle are also different.

In a possible implementation, the wind force parameter is from a DU corresponding to the antenna 20. For example, in the base station 100 provided in embodiments of this application, the DU is configured to provide the wind force parameter for the antenna 20. For example, the DU is configured to generate the wind force parameter based on meteorological information.

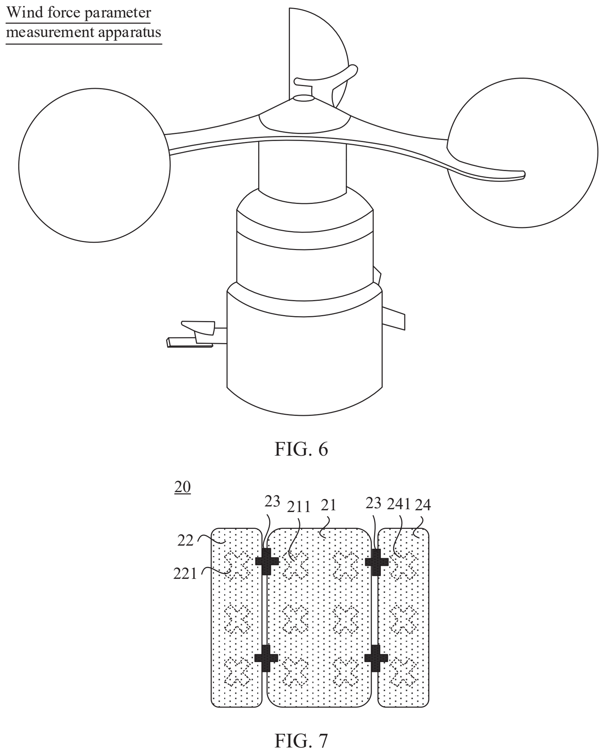

In another possible implementation, the wind force parameter is from a wind force parameter measurement apparatus. It is clear that the wind force parameter measurement apparatus may be integrated into the antenna 20, or may not be integrated into the antenna 20. For example, the base station 100 provided in embodiments of this application further includes the wind force parameter measurement apparatus, and the wind force parameter measurement apparatus is configured to obtain the wind force parameter. FIG. 6 is a diagram of a structure of a wind force parameter measurement apparatus according to an embodiment of this application. It is clear that FIG. 6 is merely an example, and no limitation is imposed. A location at which the wind force parameter measurement apparatus is disposed in the base station 100 is not limited in this embodiment of this application. In a possible implementation, a height at which the wind force parameter measurement apparatus is disposed and a height at which an antenna 20 is disposed are the same or similar. For example, the height at which the wind force parameter measurement apparatus is disposed is higher than the height at which the antenna 20 is disposed. In this way, a wind force parameter measured by the wind force parameter measurement apparatus is greater than a wind force parameter actually borne by the antenna 20. Rotating based on a greater wind force parameter can improve safety of the antenna 20.

Regardless of whether the wind force parameter is from the DU or the wind force parameter measurement apparatus, the wind force parameter may be set based on an actual use requirement.

In another possible implementation, the first parameter includes a service parameter.

For example, the service parameter includes at least one of service amount (or a service load amount) and service distribution azimuth. The service amount refers to traffic of a base station, and is a total amount of data whose transmission is performed by the base station within a period of time. The data includes all data received and sent by the base station, such as voice, SMS message, and data. The service distribution azimuth refers to a direction and an angle of the traffic of the base station. In this case, rotation angles of the first antenna array 21 and the second antenna array 22 are adjusted based on the service parameter, to adjust the included angle (or the geometric structure) between the first antenna array 21 and the second antenna array 22. In this way, a service requirement of the antenna 20 and performance of the communication system of the antenna 20 are balanced under different service requirements.

For example, for different service parameters, the first antenna array 21 and the second antenna array 22 correspond to different included angles, so that the antenna 20 corresponds to different coverage areas. For example, for a first service parameter, the first included angle is formed between the first antenna array 21 and the second antenna array 22. For a second service parameter, the second included angle is formed between the first antenna array 21 and the second antenna array 22. The first service parameter and the second service parameter are different, and the first included angle and the second included angle are also different.

In a possible implementation, the service parameter is from the DU corresponding to the antenna 20. For example, in the base station 100 provided in embodiments of this application, the DU is configured to provide the service parameter for the antenna 20.

In another possible implementation, the first parameter may include a rotation parameter. The rotation parameter is generated based on the wind force parameter and/or the service parameter.

It may also be understood as that the first parameter received by the antenna 20 includes rotation control information, and the DU directly controls rotation of the first antenna array 21 and the second antenna array 22 based on the rotation parameter in the first parameter. Alternatively, the rotation may be controlled by an RU.

For example, the rotation parameter represents a rotation result.

For example, the rotation parameter may be controlling the first antenna array 21 to rotate counterclockwise to be perpendicular to the second antenna array 22. Alternatively, for example, the rotation parameter may be controlling the first antenna array 21 to rotate clockwise to form an included angle of 120° with the second antenna array 22.

Alternatively, for example, the rotation parameter represents a rotation process.

For example, the rotation parameter may be controlling the first antenna array 21 to rotate counterclockwise by 90°. Alternatively, for example, the rotation parameter may be controlling the first antenna array 21 to rotate clockwise by 60°.

It is clear that the foregoing enumeration is merely an example, and no limitation is imposed.

In a possible implementation, the rotation parameter is from the DU corresponding to the antenna 20. After directly processing the wind force parameter and/or the service parameter, the DU generates the rotation parameter. For example, the base station 100 obtains the service parameter, and the DU generates the rotation parameter based on the service parameter. For example, the service parameter is a service distribution azimuth, and the service distribution azimuth represents that there are service requirements both in front of and on a side of the antenna 20. The DU generates the rotation parameter based on the service parameter. The rotation parameter is controlling the first antenna array 21 to rotate counterclockwise by 90°.

Alternatively, for example, the base station 100 obtains the wind force parameter, and the DU generates the rotation parameter based on the wind force parameter. For example, the wind force parameter is a wind speed, and the wind speed is at a hurricane level. The DU generates the rotation parameter based on the wind force parameter. The rotation parameter is controlling the first antenna array 21 to rotate counterclockwise by 90°.

Alternatively, for example, when the base station 100 obtains the service parameter and the wind force parameter, the DU is configured to generate the rotation parameter based on the wind force parameter, to ensure safety of the antenna 20.

For example, the service parameter is a service distribution azimuth, and the service distribution azimuth represents that there is a large service requirement in front of the antenna 20. In this case, only when the first antenna array 21 and the second antenna array 22 are located on a same plane, a communication effect of the antenna 20 can be good. The wind force parameter is a wind speed, and the wind speed is at a hurricane level. In this case, only when the first antenna array 21 and the second antenna array 22 are perpendicular to each other, safety performance of the antenna 20 can be ensured. In this case, the DU generates the rotation parameter based on the wind force parameter. The rotation parameter is controlling the first antenna array 21 to rotate counterclockwise by 90°.

Alternatively, for example, when the base station 100 obtains the service parameter and the wind force parameter, the DU is configured to generate the rotation parameter based on the service parameter, to ensure a communication capability of the antenna 20. For example, the service parameter is a service distribution azimuth, and the service distribution azimuth represents that there is a large service requirement in front of the antenna 20. In this case, only when the first antenna array 21 and the second antenna array 22 are located on a same plane, the communication effect of the antenna 20 can be good. The wind force parameter is a wind speed, and the wind speed is at a hurricane level. In this case, only when the first antenna array 21 and the second antenna array 22 are perpendicular to each other, the safety performance of the antenna 20 can be ensured. In this case, the DU generates the rotation parameter based on the service parameter. The rotation parameter is controlling the first antenna array 21 to rotate to be located on a same plane as the second antenna array 22.

Alternatively, for example, when the base station 100 obtains the service parameter and the wind force parameter, the DU is configured to generate the rotation parameter based on an average value of a rotation angle corresponding to the service parameter and a rotation angle corresponding to the wind force parameter, to balance the safety and the communication capability of the antenna 20.

For example, the service parameter is a service distribution azimuth, and the service distribution azimuth represents that there is a large service requirement in front of the antenna 20. In this case, only when the first antenna array 21 and the second antenna array 22 are located on a same plane, the communication effect of the antenna 20 can be good. The wind force parameter is a wind speed, and the wind speed is at a hurricane level. In this case, only when the first antenna array 21 and the second antenna array 22 are perpendicular to each other, the safety performance of the antenna 20 can be ensured. In this case, the DU generates the rotation parameter based on the average value of the rotation angle corresponding to the service parameter and the rotation angle corresponding to the wind force parameter. The rotation parameter is controlling the first antenna array 21 to rotate counterclockwise to form an included angle of 240° with the second antenna array 22.

In still another possible implementation, the first parameter includes the wind force parameter and the service parameter.

In other words, rotation angles of the first antenna array 21 and the second antenna array 22 may be determined based on the wind force parameter, or the rotation angles of the first antenna array 21 and the second antenna array 22 may be determined based on the service parameter.

In a possible implementation, although the first parameter includes the wind force parameter and the service parameter, at a same moment, the first antenna array 21 and the second antenna array 22 rotate based on only one of the wind force parameter and the service parameter.

For example, although the first parameter includes the wind force parameter and the service parameter at a moment, the first antenna array 21 and the second antenna array 22 rotate based on only one of the wind force parameter and the service parameter, to adjust the included angle θ.

In a first case, at a moment, only the wind force parameter indicates that the first antenna array 21 and the second antenna array 22 need to rotate. In this case, the DU provides the wind force parameter for the antenna 20.

In a second case, at a moment, only the service parameter indicates that the first antenna array 21 and the second antenna array 22 need to rotate. In this case, the DU provides the service parameter for the antenna 20.

In a third case, at a moment, both the wind force parameter and the service parameter indicate that the first antenna array 21 and the second antenna array 22 need to rotate. However, the first antenna array 21 and the second antenna array 22 rotate based on only the wind force parameter. In this case, when the base station 100 obtains both the service parameter and the wind force parameter at a same moment, the DU is configured to choose to provide the wind force parameter for the antenna 20 as the first parameter based on which the first antenna array 21 and the second antenna array 22 in the antenna 20 rotate. Alternatively, it is understood as that when the antenna 20 needs to rotate based on both the wind force parameter and the service parameter, the DU provides only the wind force parameter for the antenna 20, and does not provide the service parameter, to first ensure the safety of the antenna 20. The wind force parameter affects a safe life, and the service parameter affects the communication effect. In this case, rotating based on the wind force parameter can preferentially ensure the safety of the antenna 20.

In a fourth case, at a moment, both the wind force parameter and the service parameter indicate that the first antenna array 21 and the second antenna array 22 need to rotate. However, the first antenna array 21 and the second antenna array 22 rotate based on only the service parameter. In this case, when the base station 100 obtains the service parameter and the wind force parameter, the DU is configured to choose to provide the service parameter for the antenna 20 as the first parameter based on which the first antenna array 21 and the second antenna array 22 in the antenna 20 rotate. Alternatively, it is understood as that when the antenna 20 needs to rotate based on both the wind force parameter and the service parameter, the DU provides only the service parameter for the antenna 20, and does not provide the wind force parameter, to first ensure the communication effect of the antenna 20. In some application scenarios in which requirements on communication effects are high, rotating based on the service parameter can preferentially ensure the communication effect.

In a fifth case, at a moment, the first parameter includes the wind force parameter and the service parameter, and the first antenna array 21 and the second antenna array 22 need to rotate based on the wind force parameter and the service parameter, to adjust the included angle θ. For example, the first antenna array 21 and the second antenna array 22 first rotate based on the service parameter, and then rotate based on the wind force parameter. In this case, the DU first provides the service parameter for the antenna 20, and then provides the wind force parameter for the antenna 20. Alternatively, for example, the first antenna array 21 and the second antenna array 22 first rotate based on the wind force parameter, and then rotate based on the service parameter. In this case, the DU first provides the wind force parameter for the antenna 20, and then provides the service parameter for the antenna 20.

However, regardless of whether the first antenna array 21 and the second antenna array 22 rotate based on only the wind force parameter, or the first antenna array 21 and the second antenna array 22 rotate based on only the service parameter, or the first antenna array 21 and the second antenna array 22 need to rotate based on the wind force parameter and the service parameter, at a same moment, the first antenna array 21 and the second antenna array 22 rotate based on only one of the wind force parameter and the service parameter. If the first antenna array 21 and the second antenna array 22 need to rotate based on the wind force parameter and the service parameter, the first antenna array 21 and the second antenna array 22 may rotate twice, and then determine the included angle θ.

In another possible implementation, the first parameter includes the wind force parameter and the service parameter. At a same moment, the first antenna array 21 and the second antenna array 22 rotate based on the wind force parameter and the service parameter.

For example, the DU provides the average value of the rotation angle corresponding to the service parameter and the rotation angle corresponding to the wind force parameter for the antenna 20, to balance the safety and the communication capability of the antenna 20.

Alternatively, for example, at a previous moment, an application scenario is that a wind speed is low and a service amount in front is the maximum. In this case, the first antenna array 21 and the second antenna array 22 are located on a same plane, and are perpendicular to the front. At a current moment, the application scenario changes. The wind force parameter indicates that the wind speed increases, and the included angle between the first antenna array 21 and the second antenna array 22 needs to be changed. The service parameter indicates that a service amount in a direction deflected counterclockwise by 45° from the front becomes the maximum, and an orientation of the first antenna array 21 needs to be rotated. In this case, the DU indicates the first antenna array 21 to deflect counterclockwise by 45°, and indicates the second antenna array 22 to rotate clockwise by 90°, to balance the wind force parameter and the service parameter.

In still another possible implementation, the first parameter includes the wind force parameter and the rotation parameter.

In yet another possible implementation, the first parameter includes the service parameter and the rotation parameter.

In still yet another possible implementation, the first parameter includes the wind force parameter, the service parameter, and the rotation parameter.

For example, when the antenna 20 receives only one type of parameter, the first antenna array 21 and the second antenna array 22 rotate based on the one type of parameter. When the antenna 20 receives a plurality of types of parameters, priorities of the plurality of types of parameters are sequentially: the rotation parameter, the wind force parameter, and the service parameter.

Still refer to FIG. 3. In a possible implementation, the first antenna array 21 is connected to the second antenna array 22.

For example, the antenna 20 further includes a connecting member 23. The first antenna array 21 and the second antenna array 22 are connected via the connecting member 23. The connecting member 23 is configured to drive the first antenna array 21 and the second antenna array 22 to rotate relative to each other.

For example, the connecting member 23 drives, based on the first parameter, the first antenna array 21 and the second antenna array 22 to rotate relative to each other. It is clear that the connecting member 23 may be directly controlled based on the first parameter, to drive the first antenna array 21 and the second antenna array 22 to rotate relative to each other. The connecting member 23 may alternatively convert the first parameter to generate a control signal, to drive the first antenna array 21 and the second antenna array 22 to rotate relative to each other.

In a possible implementation, the connecting member 23 is directly connected to the wind force parameter measurement apparatus shown in FIG. 6, and the wind force parameter measurement apparatus directly drives the connecting member 23 to rotate.

A structure of the connecting member 23 is not limited in embodiments of this application. Any structure that can drive the first antenna array 21 and the second antenna array 22 to rotate relative to each other is applicable to embodiments of this application.

The connecting member 23 serves as a rotating piece, and the first antenna array 21 and the second antenna array 22 serve as stationary pieces. The connecting member 23 drives the first antenna array 21 and the second antenna array 22 to rotate relative to each other. The structure of the connecting member 23 is simple and easy to implement, and stability of the antenna 20 is high.

In a possible implementation, the connecting member 23 is one component. One end of the connecting member 23 is connected to the first antenna array 21, and another end of the connecting member 23 is connected to the second antenna array 22. The connecting member 23 has a simple structure and high stability.

In another possible implementation, the connecting member 23 includes a first connecting piece and a second connecting piece. The first connecting piece is connected to the first antenna array 21, the second connecting piece is connected to the second antenna array 22, and the first connecting piece is connected to the second connecting piece, to implement connection between the first antenna array 21 to the second antenna array 22.

For example, both the first connecting piece and the second connecting piece may be gears.

The connecting member 23 includes a plurality of connecting pieces that are connected, and the plurality of connecting pieces can rotate independently. This helps implement independent rotation of the first antenna array 21 and the second antenna array 22.

FIG. 7 is a diagram of a structure of an antenna according to an embodiment of this application.

In a possible implementation, as shown in FIG. 7, the antenna 20 further includes a third antenna array 24. The third antenna array 24 includes one or a plurality of third elements 241. The plurality of third elements 241 are arranged, for example, at equal row spacings and equal column spacings.

The third antenna array 24 is disposed on a side that is of a first antenna array 21 and that is away from a second antenna array 22, or it is understood as that the second antenna array 22 and the third antenna array 24 are disposed on two opposite sides of the first antenna array 21.

It is clear that a structure of the third antenna array 24 and a structure of the second antenna array 22 may be completely the same, or may not be completely the same, or may be completely different. For example, a quantity of third elements 241 included in the third antenna array 24 and a quantity of second elements 221 included in the second antenna array 22 may be the same, or may be different. Alternatively, for example, a size of the third antenna array 24 and a size of the second antenna array 22 may be the same, or may be different.

In a first possible implementation, the first antenna array 21 is connected to a pole in a base station 100.

In a possible implementation, the first antenna array 21 is, for example, fastened to the pole in the base station 100, and the first antenna array 21 remains stationary.

In another possible implementation, the first antenna array 21 is, for example, rotatably connected to the pole in the base station 100 via a structure like a rotation apparatus. The first antenna array 21 can also rotate relative to the second antenna array 22 and/or the third antenna array 24.

In addition, optionally, the second antenna array 22 can rotate relative to the first antenna array 21.

Alternatively, optionally, the third antenna array 24 can rotate relative to the first antenna array 21.

In a second possible implementation, the second antenna array 22 is connected to the pole in the base station 100.

In a possible implementation, the second antenna array 22 is, for example, fastened to the pole in the base station 100, and the second antenna array 22 remains stationary.

In another possible implementation, the second antenna array 22 is, for example, rotatably connected to the pole in the base station 100 via a structure like a rotation apparatus. The second antenna array 22 can also rotate relative to the first antenna array 21.

In addition, optionally, the first antenna array 21 can rotate relative to the second antenna array 22.

Alternatively, optionally, the third antenna array 24 can rotate relative to the first antenna array 21.

In a third possible implementation, the third antenna array 24 is connected to the pole in the base station 100.

In a possible implementation, the third antenna array 24 is, for example, fastened to the pole in the base station 100, and the third antenna array 24 remains stationary.

In another possible implementation, the third antenna array 24 is, for example, rotatably connected to the pole in the base station 100 via a structure like a rotation apparatus. The third antenna array 24 can also rotate relative to the first antenna array 21.

In addition, optionally, the first antenna array 21 can rotate relative to the third antenna array 24.

Alternatively, optionally, the second antenna array 22 can rotate relative to the first antenna array 21.

In a possible implementation, the first antenna array 21 and the third antenna array 24 are connected via a connecting member 23. The connecting member 23 is configured to drive the first antenna array 21 and the third antenna array 24 to rotate relative to each other.

For example, the first antenna array 21, the second antenna array 22, or the third antenna array 24 all can rotate.

Alternatively, for example, the first antenna array 21 remains stationary, the third antenna array 24 can rotate relative to the first antenna array 21, and the second antenna array 22 can rotate relative to the first antenna array 21.

In this way, the first antenna array 21 is a stationary radiation surface, and the second antenna array 22 and the third antenna array 24 are adjustable radiation surfaces, to ensure basic performance of the antenna 20.

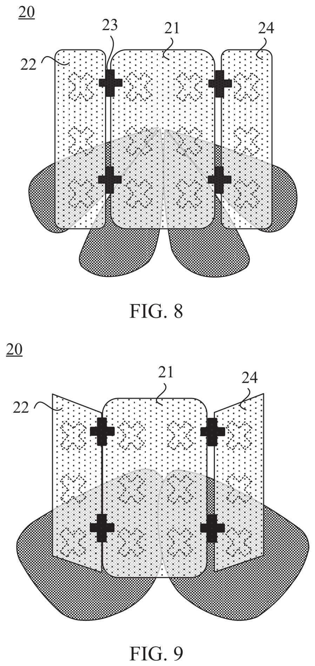

FIG. 8 to FIG. 10 each are a diagram of a beam width according to an embodiment of this application.

In a possible implementation, a width of a beam generated when the first antenna array 21, the second antenna array 22, and the third antenna array 24 are located on a same plane ($\theta$=180°) is narrower than a width of a beam generated when a plane on which the second antenna array 22 is located and a plane on which the third antenna array 24 is located separately intersect a plane on which the first antenna array 21 is located ($\theta$≠180°).

For example, in FIG. 8, the first antenna array 21, the second antenna array 22, and the third antenna array 24 are located on a same plane. In this case, the beam generated by the antenna 20 is the narrowest. For example, the antenna 20 generates four narrow beams.

In FIG. 9, both the second antenna array 22 and the third antenna array 24 rotate inward (in a direction in which $\theta$>180°), and a plane on which the second antenna array 22 is located and a plane on which the third antenna array 24 is located separately intersect the plane on which the first antenna array 21 is located. In this case, a width of a beam generated by the antenna 20 is wider than the width of the beam generated at the angle shown in FIG. 8. For example, the antenna 20 generates two medium-wide beams.

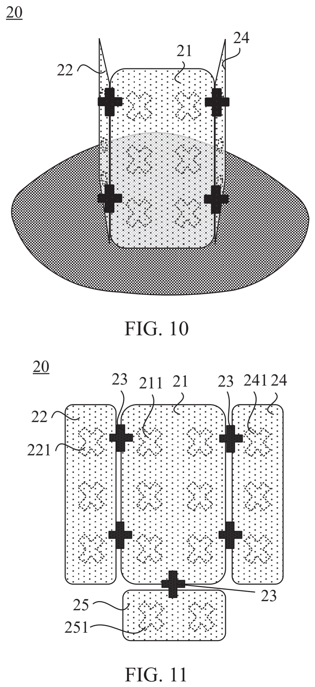

In FIG. 10, the second antenna array 22 and the third antenna array 24 further rotate inward based on the angle shown in FIG. 9, and a plane on which the second antenna array 22 is located and a plane on which the third antenna array 24 is located separately intersect the plane on which the first antenna array 21 is located. In this case, a width of a beam generated by the antenna 20 is wider than the width of the beam generated at the angle shown in FIG. 9. For example, the antenna 20 generates one wide beam.

It is clear that a principle in which both the second antenna array 22 and the third antenna array 24 rotate outward (in a direction in which $\theta$<180°) and a principle in which both the second antenna array 22 and the third antenna array 24 rotate inward are the same.

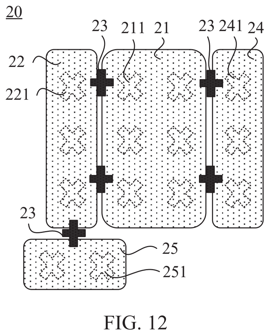

FIG. 11 and FIG. 12 each are a diagram of a structure of an antenna according to an embodiment of this application.

In a possible implementation, as shown in FIG. 11, the antenna 20 further includes a fourth antenna array 25. The fourth antenna array 25 includes one or a plurality of fourth elements 251. The plurality of fourth elements 251 are arranged, for example, at equal row spacings and equal column spacings.

A plane on which the fourth antenna array 25 is located intersects a plane on which a second antenna array 22 is located.

As shown in FIG. 11, for example, one of the fourth antenna array 25 and the second antenna array 22 is located on one side of a first antenna array 21 in a row direction, and the other one is located on one side of the first antenna array 21 in a column direction. For example, in the row direction, the second antenna array 22 is located on one side of the first antenna array 21. In this case, in the column direction, the fourth antenna array 25 is located on one side of the first antenna array 21.

Alternatively, as shown in FIG. 12, the fourth antenna array 25 is located on one side of the second antenna array 22.

The fourth antenna array 25 and the first antenna array 21 can rotate relative to each other. For example, the first antenna array 21 and the fourth antenna array 25 are connected via a connecting member 23. The connecting member 23 is configured to drive the first antenna array 21 and the fourth antenna array 25 to rotate relative to each other.

Alternatively, for example, the first antenna array 21 remains stationary, and the fourth antenna array 25 can rotate relative to the first antenna array 21.

It is clear that the antenna 20 may further include a fifth antenna array. The fifth antenna array and the fourth antenna array 25 are disposed on two opposite sides of the first antenna array 21.

In embodiments of this application, cells corresponding to a plurality of antenna arrays included in the antenna 20 may be the same or may be different. This is not limited in embodiments of this application. In addition, the plurality of antenna arrays included in the antenna 20 may operate or may not operate, to adjust a beamforming capability of the antenna 20.

An embodiment of this application further provides an antenna feeder system. Any antenna 20 shown above may be used in the antenna feeder system provided in this embodiment of this application. The antenna feeder system may be, for example, the antenna feeder system shown in FIG. 1 to FIG. 2B.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. An antenna, comprising:

    a first antenna array; and
    a second antenna array, wherein
    the first antenna array and the second antenna array can rotate relative to each other.

2. The antenna according to claim 1, wherein the first antenna array and the second antenna array can rotate relative to each other based on a first parameter.

3. The antenna according to claim 2, wherein the first parameter comprises at least one of wind force parameter, service parameter, and rotation parameter, wherein
the wind force parameter comprises at least one of wind speed, wind direction, wind force, wind pressure, and wind load, the service parameter comprises at least one of service amount and service distribution azimuth, and the rotation parameter is generated based on the wind force parameter and/or the service parameter.

4. The antenna according to claim 3, wherein the wind force parameter is from a wind force parameter measurement apparatus or a distributed unit corresponding to the antenna.

5. The antenna according to claim 3 or 4, wherein the service parameter and/or the rotation parameter are/is from the distributed unit corresponding to the antenna.

6. The antenna according to any one of claims 3 to 5, wherein at a same moment, the first antenna array and the second antenna array are configured to rotate based on the first parameter.

7. The antenna according to any one of claims 1 to 6, wherein the antenna further comprises a connecting member, wherein
the first antenna array and the second antenna array are connected via the connecting member, and the connecting member is configured to drive the first antenna array and the second antenna array to rotate relative to each other.

8. The antenna according to claim 7, wherein

    the connecting member comprises a first connecting piece and a second connecting piece, wherein the first connecting piece is connected to the first antenna array, and the second connecting piece is connected to the second antenna array;
    or
    one end of the connecting member is connected to the first antenna array, and another end of the connecting member is connected to the second antenna array.

9. The antenna according to any one of claims 1 to 8, wherein the antenna further comprises a third antenna array;

    the third antenna array is disposed on a side that is of the first antenna array and that is away from the second antenna array; and
    the third antenna array and the first antenna array can rotate relative to each other.

**10.** The antenna according to claim 9, wherein the third antenna array can rotate relative to the first antenna array.

**11.** The antenna according to any one of claims 1 to 10, wherein the antenna further comprises a fourth antenna array, wherein
a plane on which the fourth antenna array is located intersects a plane on which the second antenna array is located, and the fourth antenna array and the first antenna array can rotate relative to each other.

**12.** The antenna according to any one of claims 1 to 11, wherein both the first antenna array and the second antenna array can rotate.

**13.** The antenna according to any one of claims 1 to 12, wherein the first antenna array and the second antenna array can rotate to be on a same plane.

**14.** The antenna according to any one of claims 1 to 13, wherein a width of a beam generated when the first antenna array and the second antenna array are located on a same plane is narrower than a width of a beam generated when a plane on which the first antenna array is located intersects the plane on which the second antenna array is located.

**15.** The antenna according to any one of claims 1 to 14, wherein the second antenna array can skip radiating a signal.

**16.** An antenna feeder system, comprising: a cable and an antenna, wherein the cable is connected to the antenna, and the antenna comprises the antenna according to any one of claims 1 to 15.

**17.** A base station, comprising: a distributed unit and the antenna feeder system according to claim 16, wherein the distributed unit is connected to the antenna feeder system.

**18.** The base station according to claim 17, wherein the distributed unit is configured to provide at least one of service parameter, rotation parameter, and wind force parameter for an antenna.

**19.** The base station according to claim 18, wherein the distributed unit is further configured to generate the wind force parameter based on meteorological information.

**20.** The base station according to any one of claims 17 to 19, wherein the base station further comprises a wind force parameter measurement apparatus, wherein the wind force parameter measurement apparatus is configured to obtain the wind force parameter.

**21.** The base station according to any one of claims 17 to 20, wherein when the base station obtains the service parameter and the wind force parameter at a same moment, the distributed unit is configured to choose the wind force parameter as a first parameter, or the distributed unit is configured to generate the rotation parameter based on the wind force parameter.

FIG. 1

FIG. 2A

FIG. 2B

FIG. 3

20

FIG. 4

20

FIG. 5

Wind force parameter
measurement apparatus

FIG. 6

FIG. 7

FIG. 8

FIG. 9

FIG. 10

FIG. 11

FIG. 12

## INTERNATIONAL SEARCH REPORT

| International application No. |
|---|
| **PCT/CN2024/103703** |

**A. CLASSIFICATION OF SUBJECT MATTER**

H01Q 1/00(2006.01)i

According to International Patent Classification (IPC) or to both national classification and IPC

**B. FIELDS SEARCHED**

Minimum documentation searched (classification system followed by classification symbols)

IPC:H01Q

Documentation searched other than minimum documentation to the extent that such documents are included in the fields searched

Electronic data base consulted during the international search (name of data base and, where practicable, search terms used)

CNTXT, ENTXT, ENTXTC, CNKI: 风荷载, 风力, 风速, 风向, 风压, 风载, 风阻, 角度, 天线, 旋转, 阵, 转, 转动, array+, rotat+, antenna+

**C. DOCUMENTS CONSIDERED TO BE RELEVANT**

| Category* | Citation of document, with indication, where appropriate, of the relevant passages | Relevant to claim No. |
|---|---|---|
| X | CN 217114808 U (RESEARCH INSTITUTE OF CHINA MOBILE COMMUNICATIONS CORP. et al.) 02 August 2022 (2022-08-02) description, paragraphs [0002]-[0071], and figures 1-10 | 1, 2, 7, 8, 11-17 |
| Y | CN 217114808 U (RESEARCH INSTITUTE OF CHINA MOBILE COMMUNICATIONS CORP. et al.) 02 August 2022 (2022-08-02) description, paragraphs [0002]-[0071], and figures 1-10 | 3-21 |
| Y | CN 116315601 A (HUAWEI TECHNOLOGIES CO., LTD.) 23 June 2023 (2023-06-23) description, paragraphs [0003]-[0186], and figures 1-30 | 3-21 |
| A | US 2016380353 A1 (AIRSPAN NETWORKS INC.) 29 December 2016 (2016-12-29) entire document | 1-21 |
| A | CN 113169769 A (QUALCOMM INC.) 23 July 2021 (2021-07-23) entire document | 1-21 |
| A | US 2021029556 A1 (COMMSCOPE TECHNOLOGIES LLC) 28 January 2021 (2021-01-28) entire document | 1-21 |

☑ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 September 2024** | **23 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/103703** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2020411961 A1 (COMMSCOPE TECHNOLOGIES LLC) 31 December 2020 (2020-12-31) entire document | 1-21 |

Form PCT/ISA/210 (second sheet) (July 2022)

## INTERNATIONAL SEARCH REPORT
### Information on patent family members

International application No.

**PCT/CN2024/103703**

| Patent document cited in search report | | | Publication date (day/month/year) | Patent family member(s) | | | Publication date (day/month/year) |
|---|---|---|---|---|---|---|---|
| CN | 217114808 | U | 02 August 2022 | None | | | |
| CN | 116315601 | A | 23 June 2023 | WO | 2023088446 | A1 | 25 May 2023 |
| US | 2016380353 | A1 | 29 December 2016 | US | 2018213417 | A1 | 26 July 2018 |
| | | | | US | 11811127 | B2 | 07 November 2023 |
| | | | | GB | 201516901 | D0 | 11 November 2015 |
| | | | | GB | 2539727 | A | 28 December 2016 |
| | | | | GB | 2539727 | B | 12 May 2021 |
| | | | | US | 10306485 | B2 | 28 May 2019 |
| | | | | EP | 3314783 | A1 | 02 May 2018 |
| | | | | EP | 3314783 | B1 | 08 May 2024 |
| | | | | WO | 2016207596 | A1 | 29 December 2016 |
| CN | 113169769 | A | 23 July 2021 | EP | 3895329 | A1 | 20 October 2021 |
| | | | | US | 2021344408 | A1 | 04 November 2021 |
| | | | | US | 2020195336 | A1 | 18 June 2020 |
| | | | | US | 11070279 | B2 | 20 July 2021 |
| | | | | WO | 2020123088 | A1 | 18 June 2020 |
| US | 2021029556 | A1 | 28 January 2021 | EP | 3991250 | A1 | 04 May 2022 |
| | | | | EP | 3991250 | A4 | 18 January 2023 |
| | | | | US | 2021250780 | A1 | 12 August 2021 |
| | | | | US | 11595827 | B2 | 28 February 2023 |
| | | | | WO | 2020258029 | A1 | 30 December 2020 |
| | | | | US | 11019506 | B2 | 25 May 2021 |
| | | | | US | 2023164588 | A1 | 25 May 2023 |
| | | | | US | 11917427 | B2 | 27 February 2024 |
| US | 2020411961 | A1 | 31 December 2020 | US | 11056773 | B2 | 06 July 2021 |
| | | | | EP | 3758142 | A1 | 30 December 2020 |
| | | | | EP | 3758142 | A8 | 24 March 2021 |
| | | | | EP | 3758142 | B1 | 07 June 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310891435